# EUROPÄISCHE PATENTANMELDUNG

(11) **EP 1 065 485 A1**
(43) Veröffentlichungstag der Anmeldung: **03.01.2001**
(21) Anmeldenummer: 00110795.2
(22) Anmeldetag: 20.05.2000
(51) Int. Cl.: G01K 1/08

(54) **Verfahren zur Erhöhung der Hochspannungsfestigkeit von Sensoren und Sensor mit erhöhter Hochspannungsfestigkeit**

(30) Priorität: 02.07.1999 DE 19930719
(71) Anmelder: Ephy-Mess Gesellschaft für Elektro-Physikalische Messgferäte mbH, 65719 Hofheim-Wallau (DE)
(72) Erfinder: Becker, Andreas Herbert Gustav, 65191 Wiesbaden (DE)
(74) Vertreter: Lieke, Winfried, Dr.

(57) **Zusammenfassung**

Die vorliegende Erfindung betrifft einen Sensor, insbesondere einen Temperatursensor, der ein Sensorelement mit mindestens zwei elektrischen Anschlüssen, isolierte Zuführungsleitungen sowie einen Schrumpfschlauch aufweist, wobei die isolierten Zuführungsleitungen an die mindestens zwei elektrischen Anschlüsse angebracht sind und, der Schrumpfschlauch das Sensorelement und die Verbindungsstellen zwischen Sensorelement und Zuführungsleitungen in der Art umgibt, daß die Zuführungsleitungen auf einer der offenen Seiten des Schrumpfschlauchs herausgeführt werden. Die Hochspannungsfestigkeit von solchen Sensoren wird dadurch erhöht, daß eine Isolierung von mindestens 0,3 mm auf die Zuführungsleitungen aufgebracht wird und ein zweiter Schrumpfschlauch auf dem ersten Schrumpfschlauch positioniert wird.

## Beschreibung

Die vorliegende Erfindung betrifft einen Sensor, insbesondere einen Temperatursensor, der ein Sensorelement mit mindestens zwei elektrischen Anschlüssen, isolierte Zuführungsleitungen sowie einen Schrumpfschlauch aufweist, wobei die isolierten Zuführungsleitungen an die mindestens zwei elektrischen Anschlüsse angebracht sind und der Schrumpfschlauch das Sensorelement und die Verbindungsstellen zwischen Sensorelement und Zuführungsleitungen in der Art umgibt, daß die Zuführungsleitungen auf einer der offenen Seiten des Schrumpfschlauchs herausgeführt werden.

Die andere offene Seite des Schrumpfschlauchs ragt im allgemeinen ein wenig über das Sensorelement heraus. Aufgrund der Schrumpfeigenschaft ist der Öffnungsdurchmesser des freien offenen Endes jedoch stark verringert.

Die Verbindung zwischen Zuführungsleitungen und den elektrischen Anschlüssen des Sensorelements kann beispielsweise eine Weichlotverbindung, eine Hartlotverbindung oder aber eine Krimpverbindung sein.

Als Sensor kann z. B. eine PTC-Halbleiterkeramik, ein KTY-Siliziumsensor oder aber ein Metallwiderstand, wie beispielsweise Platin, Nickel oder Kupfer, dienen. Der Schrumpfschlauch, der sich über den Sensor sowie die Verbindungsstellen zwischen Sensor und Zuführungsleitungen erstreckt, sorgt dafür, daß das Sensorelement eine Spannungsfestigkeit von etwa 2,5 kV besitzt. D. h. Potentialdifferenzen zwischen Sensorelement und äußerer Umgebung bis zu 2,5 kV können, ohne daß ein Spannungsdurchschlag droht, angelegt werden. Dabei kann die Spannung beispielsweise entweder in Form einer Wechselspannung als auch in Form einer Stoß- bzw. Pulsspannung (z. B. ein genormter Spannungspuls bei der die Spannung innerhalb von 50 µs aufgebaut wird, eine definierte Dauer beibehalten wird und über ein Zeitintervall von 50 ms wieder auf Null abfällt) angelegt werden. Wenn im folgenden von einer erhöhten Spannungsfestigkeit die Rede ist, so ist damit immer die Erhöhung der Spannungsfestigkeit gegenüber sowohl Wechselspannung als auch Stoßspannung gemeint. Die angegebenen Werte für die Spannungsfestigkeit sind in der Art zu verstehen, daß die Spannungsfestigkeit gegenüber mindestens einer Spannungsart (Wechselspannung oder Stoßspannung) den entsprechenden Wert erreicht.

Diese Sensoren haben jedoch den Nachteil, daß sie für eine zunehmende Anzahl von Anwendungen, bei denen eine höhere Hochspannungsfestigkeit von z. B. mindestens 12 kV erforderlich ist, ungeeignet sind.

Der vorliegenden Erfindung liegt daher die Aufgabe zugrunde, ein Verfahren zur Erhöhung der Hochspannungsfestigkeit von solchen Sensoren bereitzustellen.

Diese Aufgabe wird erfindungsgemäß dadurch gelöst, daß das Verfahren die Schritte aufweist:
a) Aufbringen einer Isolierung von mindestens 0,3 mm auf die Zuführungsleitungen und
b) Positionieren eines zweiten Schrumpfschlauches auf dem ersten Schrumpfschlauch.

Um die Spannungsfestigkeit des Sensorelementes zu erhöhen, ist es notwendig, sowohl die Spannungsfestigkeit der Zuführungsleitungen als auch die Spannungsfestigkeit des Sensors und der Verbindungsstellen zwischen Sensor und Zuführungsleitungen zu erhöhen. Durch das Aufbringen einer Isolierung von mindestens 0,3 mm auf die Zuführungsleitungen steigt die Spannungsfestigkeit der Zuführungsleitungen stark an. Als Isoliermaterial können prinzipiell nahezu alle Arten von Kunststoffen benutzt werden, auch wenn Thermoplaste und Duroplaste, und insbesondere Thermoplaste, besonders bevorzugt sind.

Die Positionierung eines zweiten Schrumpfschlauches auf dem ersten Schrumpfschlauch sorgt für eine Erhöhung der Spannungsfestigkeit des Sensors mitsamt der Verbindungsstellen zwischen Sensor und Zuführungsleitungen. Durch die dadurch entstehenden zwei Schichten entsprechend der zwei Schrumpfschläuche wird zwangsläufig der thermische Kontakt des Sensors zu seiner Umgebung schlechter. Dies wurde bisher insbesondere für Temperatursensoren als sehr problematisch angesehen. Erste Tests haben jedoch gezeigt, daß trotz der Positionierung eines zweiten Schrumpfschlauches auf dem ersten Schrumpfschlauch in der Regel eine ausreichende thermische Kontaktierung möglich ist.

Die Spannungsfestigkeit des Sensors wird durch die Kombination der beiden genannten Merkmale viel stärker erhöht als man es allein aufgrund der großen Dicke der so gebildeten Isolierung hätte erwarten können.

Eine Verbesserung des Verfahrens kann dadurch erreicht werden, daß eine Isolierung von mindestens 0,45 mm auf die Zuführungsleitungen gebracht wird. Dadurch kann die Spannungsfestigkeit der Zuführungsleitungen noch weiter erhöht werden.

Üblicherweise wird die Isolierung mit Hilfe eines Extrudierungsverfahrens direkt auf die Zuführungsleitung aufgebracht. Dies hat jedoch den Nachteil, daß die Dicke der Isolierung bzw. der Ummantelung der Zuführungsleitungen in Umfangsrichtung und in axialer Richtung leicht variiert, so daß, um eine Mindestspannungsfestigkeit an allen Positionen der Zuführungsleitung zu erreichen, die Isolierung deutlich dicker gewählt werden muß, als es bei einer konstanten Dicke der Fall wäre.

Dies kann vermieden werden, wenn die Isolierung statt dessen mit Hilfe des an sich bekannten Bandierungsverfahrens auf die Zuführungsleitungen aufgebracht wird. Das Bandierungsverfahren unterscheidet sich von dem oben beschriebenen Verfahren dadurch, daß zunächst ein Band mit gleichmäßiger Dicke hergestellt (extrudiert) wird. Das Band wird dann entweder in Längsrichtung um die Zuführungsleitung gelegt, so daß in Längsrichtung eine Naht entsteht, die dann verschweißt wird, oder in Umfangsrichtung schraubenförmig gewickelt, so daß eine schraubenförmige Naht entsteht, die dann ebenfalls verschweißt wird. Mit Hilfe dieses Verfahrens kann eine ausgesprochen gleichmäßige Dicke der Isolierung erreicht werden, so daß insgesamt die Isolierung entsprechend dünner gewählt werden kann.

Eine weitere Verbesserung des Verfahrens sieht vor, daß die Isolierung der Zuführungsleitung in mindestens zwei Schichten hergestellt wird. Dies geschieht vorzugsweise in der Art, daß nacheinander mit Hilfe der Bandierungstechnik zwei Isolierschichten auf die Zuführungsleitung aufgebracht werden. Dabei sollte möglichst darauf geachtet werden, daß die verschweißten Bandierungsnähte der beiden Schichten in Umfangsrichtung bzw. in axialer Richtung gegeneinander versetzt positioniert werden. Durch die so verwirklichten zwei Schichten der Isolierung kann eine erhöhte Spannungsfestigkeit erreicht werden, die anderenfalls nur durch eine beträchtlich dickere Isolierung möglich wäre. Es wird also Material und Platzverbrauch eingespart.

Selbstverständlich ist es auch möglich, daß mehr als zwei Schichten verwirklicht werden.

In einem besonders favorisierten Verfahren wird der zweite Schrumpfschlauch derart angeordnet, daß er an seinem der Zuführungsleitung abgewandten Ende mindestens 10 mm, vorzugsweise mindestens 20 mm, über den Sensor hinausragt. Zahlreiche Versuche haben gezeigt, daß bei einem derart positionierten zweiten Schrumpfschlauch die Hochspannungsfestigkeit des Sensorelementes noch weiter erhöht ist. Ursache hierfür ist im wesentlichen, daß die Funkenstrecke zwischen Sensorelement und äußerer Umgebung durch das verlängerte offene Ende des zweiten Schrumpfschlauchs vergrößert worden ist.

Zusätzlich kann es von Vorteil sein, daß der zweite Schrumpfschlauch an seinem der Zuführungsleitung zugewandten Ende mindestens 10 mm, vorzugsweise mindestens 20 mm, über den Sensor hinausragt.

Eine besonders materialsparende Ausführungsform sieht vor, daß der zweite Schrumpfschlauch auf mindestens einer Seite, vorzugsweise auf beiden Seiten, über den ersten Schrumpfschlauch hinausragt. Im Bereich des ersten Schrumpfschlauchs ist dadurch eine dickere (zweischichtige) Isolierung gewährleistet. In den äußeren Bereichen des zweiten Schrumpfschlauchs kommt es weniger auf eine dickere Isolierung an, als vielmehr auf eine vergrößerte Funkenstrecke.

Je nach Anwendungsfall sollte der zweite Schrumpfschlauch vorzugsweise aus PTFE oder aus PVDF bestehen.

PTFE zeichnet sich unter anderem durch eine hohe Wärmebeständigkeit bis zu 260 °C aus. Es ist daher meist dann, wenn eine hohe Wärmebeständigkeit des Sensors erreicht werden soll, das geeignete Material. Es hat zudem den Vorteil, daß der Innendurchmesser eines aus diesem Material hergestellten Schrumpfschlauches sich bei der Schrumpfung auf etwa ein Viertel seiner ursprünglichen Größe verringert.

Es hat jedoch den Nachteil, daß es eine hohe Schrumpftemperatur im allgemeinen zwischen 350 und 500 °C benötigt. Diese Temperatur kann jedoch für einige Sensoren zu hoch sein, da sich dann die Lötstellen zwischen elektrischen Anschlüssen und Zuführungsleitungen lösen können oder das Sensorelement als solches Schaden nimmt. In diesen Fällen ist vorzugsweise auf PVDF zurückzugreifen, da die Schrumpftemperatur hier nur etwa zwischen 175 °C und 300 °C beträgt. Es kann dann jedoch nur eine Wärmebeständigkeit bis zu etwa +190°C erreicht werden.

Insbesondere bei den Metallwiderständen, wie z. B. Platin, Nickel oder Kupfer, ist es jedoch möglich, die elektrischen Anschlüsse mit den Zuführungsleitungen hartzulöten, so daß die Verwendung eines PTFE-Schrumpfschlauchs möglich ist, und somit eine Temperaturbeständigkeit des Sensors bis zu etwa 260 °C erreicht wird.

Daher ist es auch von Vorteil, wenn ebenfalls für die Isolierung der Zuführungsleitungen PTFE verwendet wird.

Eine weitere Erhöhung der Hochspannungsfestigkeit kann dadurch erreicht werden, daß der Sensor einschließlich der elektrischen Anschlüsse und der Verbindungsstellen zwischen Sensor und Zuführungsleitungen mit einem Isolierlack überzogen wird.

Mit Hilfe des beschriebenen Verfahrens kann sehr einfach und kostengünstig ein handelsüblicher Sensor in seiner Spannungsfestigkeit stark erhöht werden.

Hinsichtlich des Sensors liegt der vorliegenden Erfindung die Aufgabe zugrunde, einen Sensor bereitzustellen, der preisgünstig herzustellen ist und eine hohe Spannungsfestigkeit von vorzugsweise mindestens 12 kV besitzt.

Diese Aufgabe wird dadurch gelöst, daß der Sensor, der im allgemeinen mindestens zwei elektrische Anschlüsse aufweist, an welche isolierte Zuführungsleitungen angebracht sind, und die Verbindungsstellen zwischen Sensor und Zuführungsleitungen im Inneren eines ersten Schrumpfschlauches angeordnet sind, so daß die Zuführungsleitungen auf einer ersten offenen Seite des ersten Schrumpfschlauchs herausgeführt werden, und daß die Isolierung der Zuführungsleitungen eine Dicke von mindestens 0,3 mm aufweist, und daß ein zweiter Schrumpfschlauch über dem ersten Schrumpfschlauch positioniert ist.

Im Gegensatz zu den auf dem Markt erhältlichen Sensoren, die bereits einen Schrumpfschlauch aufweisen, der über Sensorelement und die Verbindungsstellen zwischen Sensorelement und Zuführungsleitungen gezogen ist, werden hier zwei Schrumpfschläuche verwendet. Dies hat gegenüber einer Ausführungsform mit einem Schrumpfschlauch mit größerer Wandstärke, den Vorteil, daß zum einen insgesamt weniger Material bei gleicher Hochspannungsfestigkeit benötigt wird, und daß zum anderen der thermische Kontakt zwischen Sensorelement und Außenfläche des äußeren Schrumpfschlauchs verbessert ist.

Besonders bevorzugt ist eine Ausführungsform, bei welcher der Sensor eine Isolierung der Zuführungsleitungen mit einer Dicke zwischen 0,5 mm und 1 mm aufweist.

Durch die erhöhte Dicke der Isolierung der Zuführungsleitungen kann die Spannungsfestigkeit der Zuführungsleitungen erhöht werden.

Bei einer zweckmäßigen Ausführung des Sensors weist die Isolierung der Zuführungsleitungen in Umfangsrichtung und in axialer Richtung eine gleichbleibende Dicke auf.

Besonders materialsparend ist eine Ausführungsform, bei der die Isolierung der Zuführungsleitungen zwei Schichten aufweist. Besonders bevorzugt ist eine Ausführungsform, bei der die zwei Schichten der Isolierung der Zuführungsleitungen jeweils eine axial zu den Zuführungsleitungen verlaufende Bandierungsnaht besitzen, wobei die beiden Bandierungsnähte in Umfangsrichtung gegeneinander versetzt sind. Dies hat den Vorteil, daß selbst wenn eine Bandierungsnaht an einer Stelle beschädigt sein sollte, in der Regel eine hohe Spannungsfestigkeit beibehalten wird.

Alternativ dazu kann bei den zwei Schichten auch jeweils eine Bandierungsnaht schraubenförmig um die Zuführungsleitung angeordnet sein, wobei die beiden Bandierungsnähte in axialer Richtung versetzt sind.

Eine besonders hohe Spannungsfestigkeit kann dadurch erreicht werden, daß der zweite Schrumpfschlauch an seinem der Zuführungsleitung abgewandten Ende mindestens 10 mm, vorzugsweise mindestens 20 mm, über den Sensor hinausragt.

Besonders bevorzugt ist eine Ausführungsform bei welcher der zweite Schrumpfschlauch auch an seinem der Zuführungsleitung zugewandten Seite mindestens 10 mm, vorzugsweise mindestens 20 mm, über den Sensor hinausragt.

Eine besonders materialsparende Ausführungsform sieht vor, daß der zweite Schrumpfschlauch an mindestens einer Seite, vorzugsweise an beiden Seiten über den ersten Schrumpfschlauch hinausragt.

Je nach Anwendungsfall besteht der zweite Schrumpfschlauch vorzugsweise aus PTFE oder PVDF.

Weitere Vorteile, Merkmale und Anwendungsmöglichkeiten werden deutlich anhand der folgenden Beschreibung verschiedener bevorzugter Ausführungsformen und den dazugehörigen Figuren. Es zeigen:
- Figur 1: eine Ausführungsform mit einem PTC-Sensorelement,
- Figur 2: eine Ausführungsform mit einem KTY-Sensorelement und
- Figur 3: eine Ausführungsform mit einem Meßwiderstand wie z. B. Pt, Ni oder Cu als Sensorelement.

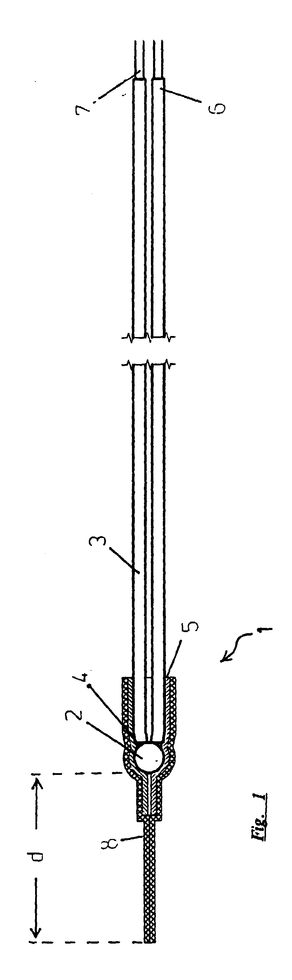

Figur 1 zeigt eine Ausführungsform eines Sensors mit einem PTC-Sensorelement. Das PTC-Sensorelement 2 ist über seine elektrischen Anschlüsse 4 mit den Zuführungsleitungen 3 verbunden. Das PTC-Sensorelement weist eine positive Temperaturcharakteristik und meist auch eine Sprung- bzw. Schaltcharakteristik auf. Ein erster Schrumpfschlauch 5 ist in der Art über das PTC-Sensorelement und die Zuführungsleitungen 3 gezogen, daß die Zuführungsleitungen 3 an einem Ende des Schrumpfschlauches 5 herausgeführt werden. Die Zuführungsleitungen 3 bestehen aus versilberter Kupferlitze 7, die mit einer PTFE-Isolation mit einem äußeren Durchmesser von etwa 1,5 mm überzogen ist. Der Durchmesser des Kupferleiters beträgt etwa 0,5 mm, was einem Querschnitt von 0,14 mm² entspricht. Die Zuführungsleitungen haben daher in der vorliegenden Ausführungsform einen elektrischen Widerstand bei Zimmertemperatur von maximal 133 Ω/km.

Über den ersten Schrumpfschlauch 5 ist ein weiterer Schrumpfschlauch 8 gezogen. Dieser zweite Schrumpfschlauch hat eine Länge von etwa 45 mm und reicht mit seinem der Zuführungsleitung abgewandten Ende etwa d = 30 mm über das PTC-Sensorelement 1 hinaus. Das freie Ende kann bei Bedarf umgebogen, umgeknickt oder zusammengebunden werden. Es dient der Vergrößerung der Funkenstrecke. Der zweite Schrumpfschlauch 8 besteht hier aus PVDF.

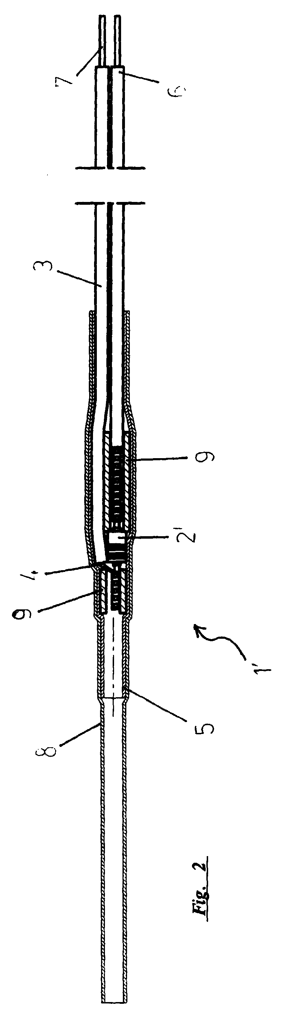

In Figur 2 ist eine Ausführungsform eines Sensors mit einem KTY-Sensorelement (KTY-Glasdiode) gezeigt. Die KTY-Glasdiode ist hier mit 2' bezeichnet. Die elektrischen Kontakte 4 sind in dieser Ausführungsform gekrimpt. Die Krimphülsen sind zusätzlich mit einem Lackglasfilamentschlauch 9 isoliert. Über die KTY-Glasdiode sowie die elektrischen Verbindungsstellen 4 ist ein erster Schrumpfschlauch 5 gezogen. Erfindungsgemäß ist auch hier ein zweiter Schrumpfschlauch 8 zusätzlich über den ersten Schrumpfschlauch gezogen. Auch hier steht der zweite Schrumpfschlauch an seinem den Zuführungsleitungen abgewandten Ende entsprechend weit über das Sensorelement hinaus.

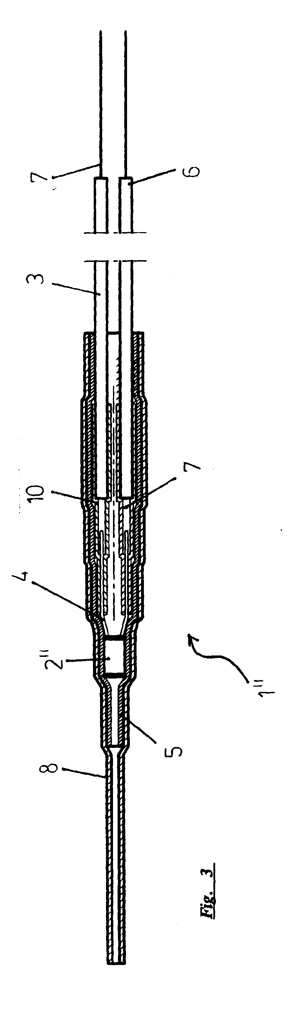

In Figur 3 ist ein Sensor mit einem metallischen Meßwiderstand als Sensorelement gezeigt. Der Meßwiderstand 2'' weist elektrische Anschlüsse 4 auf, die mit den Zuführungsleitungen 3 hartgelötet sind. Hier ist zur Isolation der Lötstellen untereinander ein innerer Schrumpfschlauch 10 über die Lötstellen gezogen. Über den Sensor samt Verbindungsstellen zu den Zuführungsleitungen sind dann ein innerer Schrumpfschlauch 5 und zusätzlich ein äußerer Schrumpfschlauch 8 gezogen. Das Schrumpfschlauchisolationsmaterial ist hier PTFE. Mit Hilfe dieses Sensors kann somit ein erhöhter maximaler Temperaturbereich von bis zu etwa +260 °C erreicht werden.

## Patentansprüche

1. Verfahren zur Erhöhung der Hochspannungsfestigkeit eines Sensors (1, 1', 1''), insbesondere eines Temperatursensors, wobei der Sensor ein Sensorelement (2, 2', 2'') mit mindestens zwei elektrischen Anschlüssen (4) aufweist, an welchen isolierte Zuführungsleitungen (3) angebracht werden, wobei Sensorelement (2, 2', 2'') und die Verbindungsstellen zwischen Sensorelement (2, 2', 2'') und Zuführungsleitungen (3) im Inneren eines ersten Schrumpfschlauchs (5) in der Art angeordnet werden, daß die Zuführungsleitungen (3) auf einer offenen Seite des ersten Schrumpfschlauchs (5) aus dem ersten Schrumpfschlauch (5) herausgeführt werden, **dadurch gekennzeichnet, daß** das Verfahren die Schritte aufweist:
a) Aufbringen einer Isolierschicht (6) von mindestens 0,3 mm Dicke auf die Zuführungsleitungen (3) und
b) Positionieren eines zweiten Schrumpfschlauches (8) über dem ersten Schrumpfschlauch (5).

2. Verfahren nach Anspruch 1, **dadurch gekennzeichnet, daß** es den Schritt aufweist: - Aufbringen einer Isolierschicht (6) von mindestens 0,45 mm Dicke auf die Zuführungsleitungen (3).

3. Verfahren nach Anspruch 1 oder 2, **dadurch gekennzeichnet, daß** die Isolierung (6) mit Hilfe des Bandierungsverfahrens auf die Zuführungsleitungen (3) aufgebracht wird.

4. Verfahren nach einem der Ansprüche 1 bis 3, **dadurch gekennzeichnet, daß** die Isolierung (6) der Zuführungsleitungen (3) in mindestens zwei Schichten hergestellt wird.

5. Verfahren nach Ansprüchen 3 und 4, **dadurch gekennzeichnet, daß** die Bandierungsnähte der beiden Schichten in Umfangsrichtung gegeneinander versetzt positioniert werden.

6. Verfahren nach einem der Ansprüche 1 bis 5, **dadurch gekennzeichnet, daß** der zweite Schrumpfschlauch (8) derart angeordnet wird, daß er an seinem den Zuführungsleitungen (3) abgewandten Ende mindestens 10 mm, vorzugsweise mindestens 20 mm, über das Sensorelement (2, 2', 2'') hinausragt.

7. Verfahren nach einem der Ansprüche 1 bis 6, **dadurch gekennzeichnet, daß** der zweite Schrumpfschlauch (8) derart angeordnet wird, daß er an seinem den Zuführungsleitungen (3) zugewandten Ende mindestens 10 mm, vorzugsweise mindestens 20 mm, über das Sensorelement (2, 2', 2'') hinausragt.

8. Verfahren nach einem der Ansprüche 1 bis 7, **dadurch gekennzeichnet, daß** der zweite Schrumpfschlauch (8) derart angeordnet wird, daß er an mindestens einer Seite, vorzugsweise an beiden Seiten, über den ersten Schrumpfschlauch (5), vorzugsweise mindestens 10 mm, hinausragt.

9. Verfahren nach einem der Ansprüche 1 bis 8, **dadurch gekennzeichnet, daß** für den zweiten Schrumpfschlauch (8) ein aus PTFE bestehender Schrumpfschlauch (8) verwendet wird.

10. Verfahren nach einem der Ansprüche 1 bis 8, **dadurch gekennzeichnet, daß** für den zweiten Schrumpfschlauch (8) ein aus PVDF bestehender Schrumpfschlauch (8) verwendet wird.

11. Verfahren nach einem der Ansprüche 1 bis 10, **dadurch gekennzeichnet, daß** für die Isolierung (6) der Zuführungsleitungen (3) PTFE verwendet wird.

12. Verfahren nach einem der Ansprüche 1 bis 11, **dadurch gekennzeichnet, daß** das Sensorelement (2, 2', 2'') einschließlich der elektrischen Anschlüsse (4) und der Verbindungsstellen zwischen Sensorelement (2, 2', 2'') und Zuführungsleitungen (3) mit einem Isolierlack überzogen werden.

13. Sensor (1, 1', 1'') mit einem Sensorelement (2, 2', 2''), das mindestens zwei elektrische Anschlüsse (4) aufweist, an welchen isolierte Zuführungsleitungen (3) angebracht sind, wobei Sensorelement (2, 2', 2'') und die Verbindungsstellen zwischen Sensorelement (2, 2', 2'') und Zuführungsleitungen (3) im Inneren eines ersten Schrumpfschlauchs (5) in der Art angeordnet sind, daß die Zuführungsleitungen (3) auf einer ersten offenen Seite des ersten Schrumpfschlauchs (5) herausgeführt werden, **dadurch gekennzeichnet, daß** die Isolierung (6) der Zuführungsleitungen (3) eine Dicke von mindestens 0,3 mm aufweist und ein zweiter Schrumpfschlauch (8) den ersten Schrumpfschlauch (5) umfassend positioniert ist.

14. Sensor (1, 1', 1'') nach Anspruch 13, **dadurch gekennzeichnet, daß** die Isolierung (6) der Zuführungsleitungen (3) eine Dicke zwischen 0,45 mm und 1 mm aufweist.

15. Sensor (1, 1', 1'') nach Anspruch 13 oder 14, **dadurch gekennzeichnet, daß** die Isolierung (6) der Zuführungsleitungen (3) in Umfangsrichtung und in axialer Richtung eine gleichmäßige Dicke aufweist.

16. Sensor (1, 1', 1'') nach einem der Ansprüche 13 bis 15, **dadurch gekennzeichnet, daß** die Isolierung (6) der Zuführungsleitungen (3) zwei getrennte Schichten aufweist.

17. Sensor (1, 1', 1'') nach Anspruch 16, dadurch gekennzeichnet, daß die zwei Schichten der Isolierung (6) der Zuführungsleitungen (3) jeweils eine axial verlaufende Bandierungsnaht besitzen, wobei die beiden Bandierungsnaht in Umfangsrichtung gegeneinander versetzt sind.

18. Sensor (1, 1', 1'') nach Anspruch 16, dadurch gekennzeichnet, daß die zwei Schichten der Isolierung (6) der Zuführungsleitungen (3) jeweils eine schraubenförmig verlaufende Bandierungsnaht besitzen, wobei die beiden Bandierungsnaht in axialer Richtung gegeneinander versetzt sind.

19. Sensor (1, 1', 1'') nach einem der Ansprüche 13 bis 18, **dadurch gekennzeichnet, daß** der zweite Schrumpfschlauch (8) an seinem den Zuführungsleitungen (6) abgewandten Ende mindestens 10 mm, vorzugsweise mindestens 20 mm, über das Sensorelement (2, 2', 2'') hinausragt.

20. Sensor (1, 1', 1'') nach einem der Ansprüche 13 bis 19, **dadurch gekennzeichnet, daß** der zweite Schrumpfschlauch (8) an seinem den Zuführungsleitungen (6) zugewandten Ende mindestens 10 mm, vorzugsweise mindestens 20 mm, über das Sensorelement (2, 2', 2'') hinausragt.

21. Sensor (1, 1', 1'') nach einem der Ansprüche 13 bis 18, **dadurch gekennzeichnet, daß** der zweite Schrumpfschlauch (8) an mindestens einer Seite, vorzugsweise an beiden Seiten, vorzugsweise mindestens 10 mm, über den ersten Schrumpfschlauch (5) hinausragt.

22. Sensor (1, 1', 1'') nach einem der Ansprüche 13 bis 21, **dadurch gekennzeichnet, daß** der zweite Schrumpfschlauch (8) aus PTFE besteht.

23. Sensor (1, 1', 1'') nach einem der Ansprüche 13 bis 21, **dadurch gekennzeichnet, daß** der zweite Schrumpfschlauch (8) aus PVDF besteht.
